# EUROPEAN PATENT SPECIFICATION

(11) **EP 2 621 243 B1**
(45) Date of publication and mention of the grant of the patent: **13.03.2019**
(21) Application number: 11839072.3
(22) Date of filing: 07.11.2011
(51) Int. Cl.: H04L 29/08

(54) **METHOD AND SYSTEM FOR CONFIGURING AND MANAGING THIRD PARTY SOFTWARE, AND MANAGEMENT SERVER**
VERFAHREN UND SYSTEM ZUR KONFIGURATION UND VERWALTUNG EINER DRITTANBIETERSOFTWARE UND MANAGEMENTSERVER DAFÜR
PROCÉDÉ ET SYSTÈME POUR CONFIGURER ET GÉRER UN LOGICIEL TIERS, ET SERVEUR DE GESTION À CET EFFET

(30) Priority: 11.11.2010 CN 201010541403
(43) Date of publication of application: 31.07.2013
(73) Proprietor: Huawei Device Co., Ltd., Dongguan, Guangdong 523808 (CN)
(72) Inventor: HE, Zhiqin, Shenzhen Guangdong 518129 (CN)
(74) Representative: Körber, Martin Hans
(86) International application number: PCT/CN2011/081852
(87) International publication number: WO 2012/062190

(56) References cited:
- CN-A- 101 237 457
- CN-A- 101 465 773
- CN-A- 101 616 430
- CN-A- 102 137 144
- TAEIN HWANG ET AL: "Design of a Digital Home Service Delivery and Management System for OSGi Framework", 10 October 2007 (2007-10-10), MANAGING NEXT GENERATION NETWORKS AND SERVICES; [LECTURE NOTES IN COMPUTER SCIENCE], SPRINGER BERLIN HEIDELBERG, BERLIN, HEIDELBERG, PAGE(S) 1 - 10, XP019101476, ISBN: 978-3-540-75475-6 * abstract * * figures 4-8 * * page 1, paragraph 1 - page 3, last paragraph * * page 4, last paragraph - page 6, paragraph 1 * * page 6, paragraphs 3,4 *
- CERVANTES H ET AL: "Consumer communications and networking series - Challenges in building service-oriented applications for osgi", IEEE COMMUNICATIONS MAGAZINE, IEEE SERVICE CENTER, PISCATAWAY, US, vol. 42, no. 5, 1 May 2004 (2004-05-01), pages 144-149, XP011112782, ISSN: 0163-6804
- DAVE MARPLES ET AL: "The Open Services Gateway Initiative: An Introductory Overview", IEEE COMMUNICATIONS MAGAZINE, IEEE SERVICE CENTER, PISCATAWAY, US, vol. 39, no. 12, 1 December 2001 (2001-12-01), pages 110-114, XP011091868, ISSN: 0163-6804

## Description

### TECHNICAL FIELD

The present invention relates to the field of communications technologies, and in particular, to a method and system for configuring and managing third party software and a management server.

### BACKGROUND

A home gateway, HGW, is a device for implementing intercommunication between each device inside a home network and an external device, and is the most core component of the home network. Via devices inside the home network, information exchange with a telecommunication network may be performed, and information exchange between internal devices may also be performed. The home gateway establishes a unified data processing center inside a home to manage data inside the home, and is connected to an external operator network. The home gateway is defined as a simple, intelligent, standard and flexible interface unit for the whole home network, and may receive communication signals from different external networks and transmit a signal to each device through the home network.

On the basis of the home gateway, operators are increasingly focused on development of various services of the home network. How to provide more new services for users and deploy these services more easily becomes the major concern of the operators. Therefore, for the home gateway acting as a platform for bearing services, platform properties, openness and modularity are crucial. At present, software and hardware separation and software modularization of the home gateway are trends of future development.

At present, a main software modularization solution of the home gateway is an OSGI, Open Service Gateway Initiative, open service gateway initiative, based gateway software modularization solution. The OSGI is a Java based software modularization framework, performs software lifecycle management on a Java software module, and provides services of software such as installing, uninstalling, enabling, disabling and security.
For example, the publication "Design of a Digital Home Service Delivery and Management System for OSGi Framework" (Taein Hwang et. al.; XP 019101476) refers to a design of a digital home service delivery management system for OSGi framework. In particular, a digital home service delivery and management system for business companies is proposed that needs to provide various home services to users. In particular, a home service delivery process from service registration by a service provider to service usage by a service user is described. First, a service provider registers service bundles via the service provider portal of a management module (MM) and then creates a new service after binding the registered bundles and inputs detailed service information. Upon end at the service registration process, a service user can subscribe to the service. After the service user subscribes to a service in the service categories, the resource manager checks the available disk space and the processing power of the service user's home gateway. If the home gateway has sufficient resources, the service bundle is installed on the home gateway and then the service user can use the subscribed service via the DSM system (service delivery and management system).

The prior art has the following disadvantage:
In the prior art, only an inherent software module in a user equipment can be configured and managed, and a business service function of the user equipment is relatively low.

### SUMMARY

Embodiments of the present invention provide a method and system for configuring and managing third party software and a management server, which can configure and manage the third party software, and enhance a business service function of a user equipment.

The embodiments of the present invention adopt the following technical solutions:
In a first aspect a method for configuring and managing third party software is provided, the method comprising:
- registering, by a management server, third party software provided by each service provider and a configuration template corresponding to the third party software;
- after an application by a user for a service via a customer service terminal succeeds, receiving, by the management server, a configuration instruction delivered by the customer service terminal, wherein the configuration instruction comprises information about a service provider providing the service and information about third party software corresponding to the service;
- notifying, by the management server, a user equipment of downloading the third party software from the service provider
- downloading, by the user equipment, the third party software from the service provider,
characterized by
- downloading, by the third party software downloaded to the user equipment, configuration data and a local configuration page from the service provider; and
- loading, by the third party software downloaded to the user equipment, the newly added local configuration page through a standard interface of the user equipment.

In a second aspect a system comprising a management server, a service provider, a customer service terminal, and a user equipment is provided, wherein the system is configured to perform the above method.

In the method for configuring and managing third party software and the management server according to the embodiments of the present invention, the management server registers the third party software provided by each service provider and the configuration template corresponding to the third party software; after the application by the user for the service via the customer service terminal succeeds, the management server receives the configuration instruction delivered by the customer service terminal, where the configuration instruction includes the information about the service provider providing the service and includes the third party software corresponding to the service; and the management server notifies the user equipment of downloading the third party software from the service provider. Compared with the prior art, in the embodiments of the present invention, configuration and management of the third party software can be performed on the user equipment, and the business service function of the user equipment can be enhanced.

### BRIEF DESCRIPTION OF DRAWINGS

To describe the technical solutions in the embodiments of the present invention more clearly, the following briefly introduces accompanying drawings required for describing the embodiments. Apparently, the accompanying drawings in the following description show merely some embodiments of the present invention, and persons of ordinary skill in the art may further obtain other drawings according to the accompanying drawings without creative efforts.
FIG. 1 is a flowchart of a method according to Embodiment 1 of the present invention;
FIG. 2A and FIG. 2B are a flowchart of a method according to Embodiment 2 of the present invention;
FIG. 3A and FIG. 3B are a flowchart of a method according to Embodiment 3 of the present invention;
FIG. 4 is a schematic structural diagram of a system according to Embodiment 4 of the present invention; and
FIG. 5 and FIG. 6 are schematic structural diagrams of a management server according to Embodiment 5 of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely part rather than all of the embodiments of the present invention. All other embodiments obtained by persons of ordinary skill in the art based on the embodiments of the present invention without creative efforts shall fall within the protection scope of the present invention.

To make the advantages of the technical solutions of the present invention more comprehensible, the following describes the present invention in detail with reference to the accompanying drawings and the embodiments.

### Embodiment 1

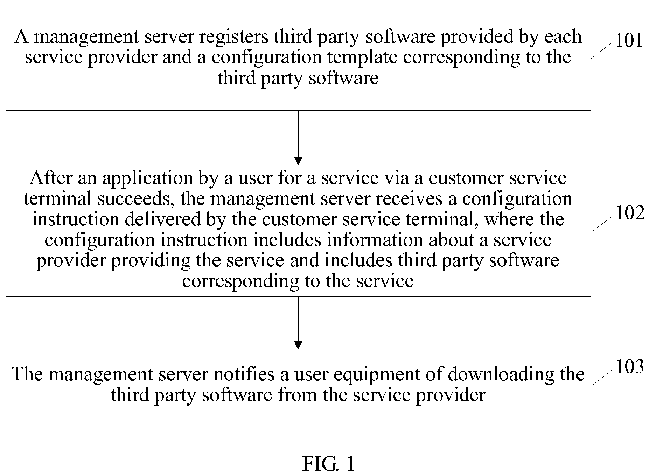

The embodiment provides a method for configuring and managing third party software. As shown in FIG. 1, the method for configuring and managing third party software includes:
101: A management server registers third party software provided by each service provider and a configuration template corresponding to the third party software.
102: After an application by a user for a service via a customer service terminal succeeds, the management server receives a configuration instruction delivered by the customer service terminal, where the configuration instruction includes information about a service provider providing the service and includes third party software corresponding to the service.
103: The management server notifies a user equipment of downloading the third party software from the service provider.

The user equipment may be, but not limited to, a customer premise equipment such as a home gateway and a set-top box.

In the method for configuring and managing third party software according to the embodiment of the present invention, the management server registers the third party software provided by each service provider and the configuration template corresponding to the third party software; after the application by the user for the service via the customer service terminal succeeds, the management server receives the configuration instruction delivered by the customer service terminal, where the configuration instruction includes the information about the service provider providing the service and includes the third party software corresponding to the service; and the management server notifies the user equipment of downloading the third party software from the service provider. Compared with the prior art, in the embodiment of the present invention, configuration and management of the third party software can be performed on the user equipment, and a business service function of the user equipment can be enhanced.

### Embodiment 2

The embodiment provides a method for configuring and managing third party software. In the embodiment, taking that a home gateway is used as a user equipment as an example, a home gateway remote management server, RSMS, performs configuration and management of the third party software on the home gateway in a unified manner.

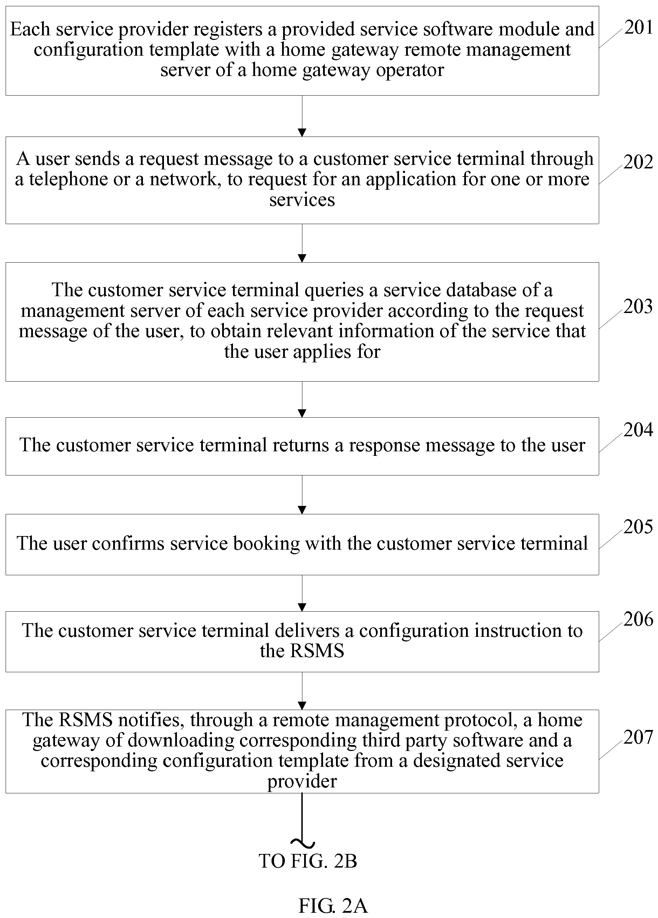

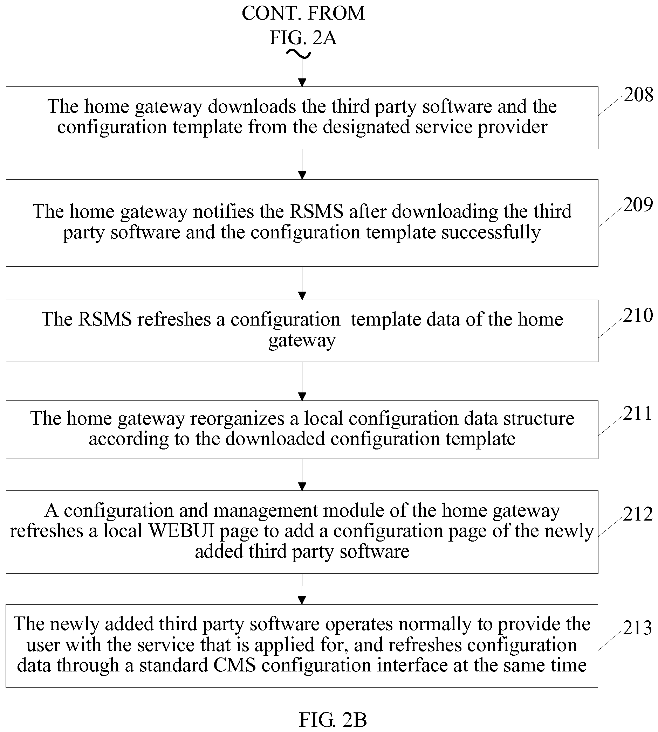

As shown in FIG. 2A and FIG. 2B, the method for configuring and managing third party software includes:
201: Each service provider registers a provided service software module and configuration template with a home gateway remote management server, RSMS, of a home gateway operator.

The home gateway operator may be, but not limited to, an ISP, Internet Service Provider, Internet service provider. The service software module is configured to provide a service for a user, and the service may be a business service.

202: The user sends a request message to a customer service terminal through a telephone or a network, to request for an application for one or more services.

The service may be the business service, and the service is provided by the service software module. The request message includes, but not limited to, information such as a name of the service.

203: The customer service terminal queries a service database of each service provider according to the request message of the user, to obtain relevant information of the service that the user applies for.

The relevant information of the service may include, but not limited to, information about a service provider providing the service, an offer for the service and a related service item.

204: The customer service terminal returns a response message to the user, where the response message may include the information about the service provider providing the service, the offer for the service, and the related service item.

205: The user confirms service booking with the customer service terminal.

206: The customer service terminal delivers a configuration instruction to the RSMS, where the configuration instruction includes the information about the service provider providing the service, third party software corresponding to the service, and the configuration template.

The third party software and the configuration template have a one-to-one corresponding relationship.

207: The RSMS notifies, through a remote management protocol, a home gateway of downloading corresponding third party software and a corresponding configuration template from a designated service provider.

208: The home gateway downloads the third party software and the configuration template from the designated service provider.

209: The home gateway notifies the RSMS after downloading the third party software and the configuration template successfully.

210: The RSMS refreshes a configuration template data of the home gateway.

211: The home gateway reorganizes a local configuration data structure according to the downloaded configuration template.

212: A configuration and management module, CMS, of the home gateway refreshes a local WEBUI page to add a configuration page of the newly added third party software.

213: The newly added third party software operates normally to provide the user with the service that is applied for, and refreshes configuration data through a standard CMS configuration interface at the same time.

In the method for configuring and managing third party software according to the embodiment of the present invention, the home gateway remote management server registers the third party software provided by each service provider and the configuration template corresponding to the third party software; after the application by the user for the service via the customer service terminal succeeds, the home gateway remote management server receives the configuration instruction delivered by the customer service terminal, where the configuration instruction includes the information about the service provider providing the service, the third party software corresponding to the service, and a configuration template; the home gateway remote management server notifies the home gateway of downloading the third party software and the configuration module from the service provider; and after the home gateway downloads the third party software and the configuration module from the service provider, the home gateway remote management server refreshes the configuration module of the home gateway. Compared with the prior art, in the embodiment of the present invention, the configuration and management of the third party software are performed on the home gateway by the management server in a unified manner, so that a business service function of the home gateway can be enhanced.

### Embodiment 3

The embodiment provides a method for configuring and managing third party software. In the embodiment, taking a home gateway as an example, configuration and management of third party software are performed on the home gateway by a service provider providing the third party software.

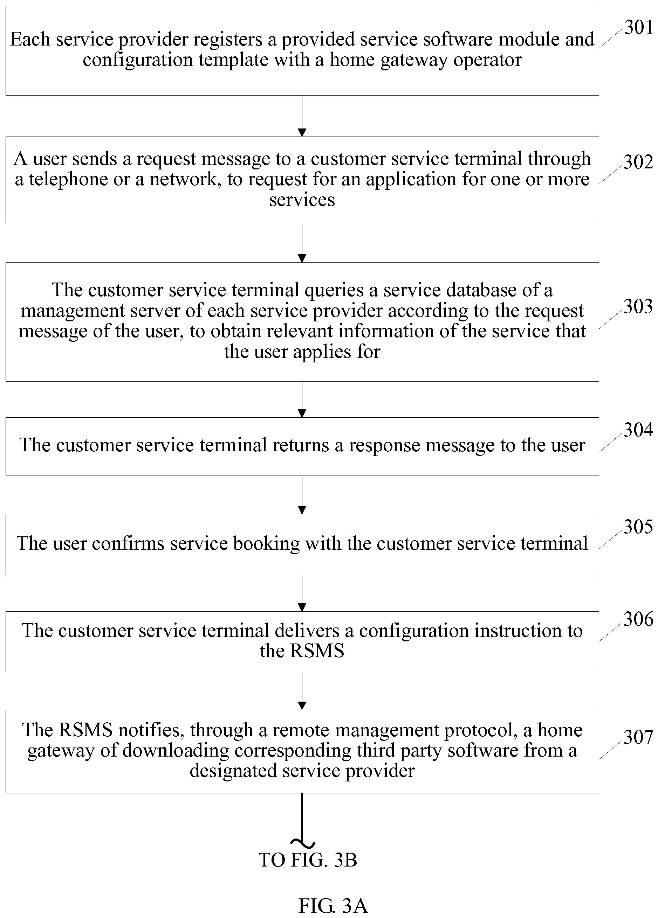

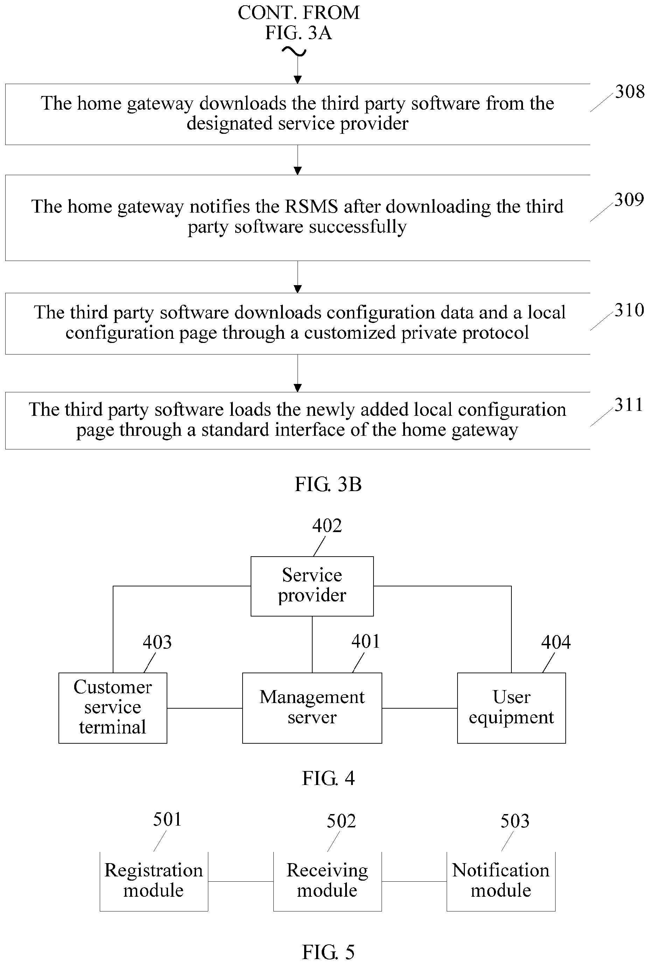

As shown in FIG. 3A and FIG. 3B, the method for configuring and managing third party software includes:
301: Each service provider registers a provided service software module and configuration template with a home gateway remote management server, RSMS, of a home gateway operator.

The home gateway operator may be, but not limited to, an ISP, Internet Service Provider, Internet service provider. The service software module is configured to provide a business service for a user.

302: The user sends a request message to a customer service terminal through a telephone or a network, to request for an application for one or more services.

The request message includes, but not limited to, information such as a name of the service.

303: The customer service terminal queries a service database of each service provider according to the request message of the user, to obtain relevant information of the service that the user applies for.

The relevant information of the service may include, but not limited to, information about a service provider providing the service, an offer for the service and a related service item.

304: The customer service terminal returns a response message to the user, where the response message may include the information about the service provider providing the service, the offer for the service, and the related service item.

305: The user confirms service booking with the customer service terminal.

306: The customer service terminal delivers a configuration instruction to the RSMS, where the configuration instruction includes the information about the service provider providing the service and includes third party software corresponding to the service.

307: The RSMS notifies, through a remote management protocol, a home gateway of downloading corresponding third party software from a designated service provider.

308: The home gateway downloads the third party software from the designated service provider.

309: The home gateway notifies the RSMS after downloading the third party software successfully.

310: The third party software downloads configuration data and a local configuration page through a customized private protocol.

There is no interference between a process in which the third party software downloads the configuration data and the local configuration page through the customized private protocol and a configuration and management module of the home gateway.

311: The third party software loads the newly added local configuration page through a standard interface of the home gateway.

In the method for configuring and managing third party software according to the embodiment of the present invention, the home gateway remote management server registers the third party software provided by each service provider and the configuration template corresponding to the third party software; after the application by the user for the service via the customer service terminal succeeds, the home gateway remote management server receives the configuration instruction delivered by the customer service terminal, where the configuration instruction includes the information about the service provider providing the service and includes the third party software corresponding to the service; the home gateway remote management server notifies the home gateway of downloading the third party software from the service provider; after the home gateway downloads the third party software and a configuration module from the service provider, the third party software downloads the configuration data and the local configuration page from the service provider, and loads the newly added local configuration page through the standard interface of the home gateway. Compared with the prior art, in the embodiment of the present invention, the configuration and management of the third party software are performed on the home gateway by the service provider providing the third party software, so that a business service function of the home gateway can be enhanced.

### Embodiment 4

The embodiment provides a system for configuring and managing third party software. As shown in FIG. 4, the system includes a management server 401, a service provider 402, a customer service terminal 403 and a user equipment 404.

The management server 401 is configured to register third party software provided by each service provider 402 and a configuration template corresponding to the third party software, after an application by a user for a service via the customer service terminal 403 succeeds, receive a configuration instruction delivered by the customer service terminal 403, and notify the user equipment 404 of downloading the third party software from the service provider 402.

The service provider 402 is configured to provide the third party software and the configuration template corresponding to the third party software.

The customer service terminal 403 is configured to receive a service application of the user, and after the application by the user for the service succeeds, deliver the configuration instruction to the management server 401, where the configuration instruction includes information about the service provider 402 providing the service and includes third party software corresponding to the service.

In the embodiment, when receiving the service application of the user, that is, receiving a request message from the user, the customer service terminal 403 queries the service provider 402 for the information about the service provider 402 providing the service and the third party software corresponding to the service, and returns a response message to the user, where the response message may include the information about the service provider providing the service, an offer for the service and a related service item, and then receives a confirmation of service booking from the user, that is, communicates and negotiates with the user, to determine whether the service that the user applies for is successful.

The user equipment 404 is configured to receive a notification from the management server 401 and download the third party software from the service provider 402.

The user equipment 404 may be, but not limited to, a customer premise equipment such as a home gateway and a set-top box.

In the system for configuring and managing third party software according to the embodiment of the present invention, the management server registers the third party software provided by each service provider and the configuration template corresponding to the third party software; after the application by the user for the service via the customer service terminal succeeds, the management server receives the configuration instruction delivered by the customer service terminal, where the configuration instruction includes the information about the service provider providing the service and includes the third party software corresponding to the service; and the management server notifies the user equipment of downloading the third party software from the service provider. Compared with the prior art, in the embodiment of the present invention, configuration and management of the third party software can be performed on the user equipment, and a business service function of the user equipment can be enhanced.

### Embodiment 5

The embodiment provides a management server. As shown in FIG. 5, the management server includes:
a registration module 501, configured to register third party software provided by each service provider and a configuration template corresponding to the third party software;
a receiving module 502, configured to, after an application by a user for a service via a customer service terminal succeeds, receive a configuration instruction delivered by the customer service terminal, where the configuration instruction includes information about a service provider providing the service and includes third party software corresponding to the service; and
a notification module 503, configured to notify a user equipment of downloading the third party software from the service provider.

Further, the configuration instruction delivered by the customer service terminal and received by the receiving module 502 further includes the configuration template corresponding to the third party software.

The notification module 503 is specifically configured to notify the user equipment of downloading the third party software and the configuration template corresponding to the third party software from the service provider.

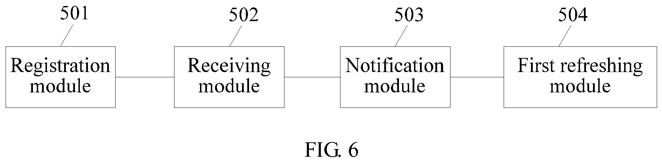

As shown in FIG. 6, the management server may further include:
a first refreshing module 504, configured to refresh a configuration module of the user equipment.

In the embodiment, the management server may be a home gateway remote management server, RSMS. The user equipment may be, but not limited to, a home gateway.

For the management server according to the embodiment of the present invention, the management server registers the third party software provided by each service provider and the configuration template corresponding to the third party software; after the application by the user for the service via the customer service terminal succeeds, the management server receives the configuration instruction delivered by the customer service terminal, where the configuration instruction includes the information about the service provider providing the service and includes the third party software corresponding to the service; the management server notifies the user equipment of downloading the third party software from the service provider; after the user equipment downloads the third party software and a configuration module from the service provider, the management server refreshes the configuration module of the user equipment, or the third party software downloads configuration data and a local configuration page from the service provider, and loads the newly added local configuration page through a standard interface of the user equipment. Compared with the prior art, in the embodiment of the present invention, the management server can perform configuration and management of the third party software on the home gateway in a unified manner, or the service provider providing the third party software performs the configuration and management of the third party software on the home gateway, so that a business service function of the user equipment can be enhanced.

The system for configuring and managing third party software and the management server provided by the embodiments of the present invention may implement the method embodiments provided in the foregoing. The method and system for configuring and managing third party software and the management server provided by the embodiments of the present invention may be applicable to, but not limited to, the configuration and management of the third party software in the home gateway.

Serial numbers of the foregoing embodiments of the present invention are only used for description, but do not indicate preference of the embodiments.

Persons skilled in the art may clearly understand that the embodiments of the present invention may be implemented in a manner of software plus a necessary universal hardware platform. Base on such understanding, the technical solutions in the embodiments of the present invention essentially, or the part contributing to the prior art may be embodied in a form of a software product. The computer software product may be stored in a storage medium such as a ROM/RAM, a magnetic disk, or an optical disk, and include several instructions for enabling a computer device, which may be a personal computer, a server, or a network device, or the like, to perform the methods described in the embodiments of the present invention or in some parts of the embodiments of the present invention.

The foregoing embodiments are not intended to limit the present invention. For persons of ordinary skill in the art, any modification, equivalent replacement, and improvement made without departing from the principle of the present invention shall fall within the protection scope of the present invention.

## Claims

1. A method for configuring and managing third party software, comprising:
• registering, by a management server (401), third party software provided by each service provider (402) and a configuration template corresponding to the third party software (step 301);
• after an application by a user for a service via a customer service terminal (403) succeeds, receiving, by the management server (401), a configuration instruction delivered by the customer service terminal (403), wherein the configuration instruction comprises information about a service provider (402) providing the service and information about third party software corresponding to the service (step 306);
• notifying, by the management server (401), a user equipment (404) of downloading the third party software from the service provider (step 307),
• downloading, by the user equipment, the third party software from the service Provider (step 308),
**characterized by**
• downloading, by the third party software downloaded to the user equipment, configuration data and a local configuration page from the service provider (402) (step 310); and
• loading, by the third party software downloaded to the user equipment, the newly added local configuration page through a standard interface of the user equipment (404) (step 311).

2. A system comprising a management server (401), a service provider (402), a customer service terminal (403), and a user equipment (404), wherein the system is configured to perform the method according to claim 1.

## Patentansprüche

1. Verfahren zum Auslegen und Verwalten einer Drittanbietersoftware, das Folgendes umfasst:
• Registrieren von Drittanbietersoftware, die von jedem Dienstanbieter (402) bereitgestellt wird, und einer Auslegungsvorlage, die der Drittanbietersoftware entspricht, durch einen Verwaltungsserver (401) (Schritt 301);
• nachdem eine Beantragung eines Dienstes durch einen Benutzer via ein Kundendienstendgerät (403) erfolgreich war, Empfangen einer Auslegungsanweisung, die vom Kundendienstendgerät (403) geliefert wurde, durch den Verwaltungsserver (401), wobei die Auslegungsanweisung Informationen über einen Dienstanbieter (402), der den Dienst bereitstellt, und Informationen über eine Drittanbietersoftware, die dem Dienst entspricht, umfasst (Schritt 306);
• Benachrichtigen einer Teilnehmereinrichtung (404) zum Herunterladen der Drittanbietersoftware vom Dienstanbieter durch den Verwaltungsserver (401) (Schritt 307),
• Herunterladen der Drittanbietersoftware vom Dienstanbieter durch die Teilnehmereinrichtung (Schritt 308),
**gekennzeichnet durch**
• Herunterladen von Auslegungsdaten und einer lokalen Auslegungsseite vom Dienstanbieter (402) durch die Drittanbietersoftware, die zur Teilnehmereinrichtung heruntergeladen wurde (Schritt 310); und
• Laden der neu hinzugefügten lokalen Auslegungsseite über eine Standardschnittstelle der Teilnehmereinrichtung (404) durch die Drittanbietersoftware, die zur Teilnehmereinrichtung heruntergeladen wurde (Schritt 311).

2. System, das einen Verwaltungsserver (401), einen Dienstanbieter (402), ein Kundendienstendgerät (403) und eine Teilnehmereinrichtung (404) umfasst, wobei das System dazu ausgelegt ist, das Verfahren nach Anspruch 1 durchzuführen.

## Revendications

1. Procédé pour configurer et gérer un logiciel tiers, consistant :
• à enregistrer, au moyen d'un serveur de gestion (401), un logiciel tiers fourni par chaque fournisseur de service (402) et un modèle de configuration correspondant au logiciel tiers (étape 301) ;
• après la réussite d'une demande par un utilisateur d'un service par le biais d'un terminal de service à la clientèle (403), à recevoir, au moyen du serveur de gestion (401), une instruction de configuration délivrée par le terminal de service à la clientèle (403), dans lequel l'instruction de configuration comporte des informations concernant un fournisseur de service (402) fournissant le service et des informations concernant un logiciel tiers correspondant au service (étape 306) ;
• à avertir, au moyen du serveur de gestion (401), un équipement utilisateur (404) du téléchargement du logiciel tiers à partir du fournisseur de service (étape 307),
• à télécharger, au moyen de l'équipement utilisateur, le logiciel tiers à partir du fournisseur de service (étape 308),
**caractérisé en ce qu'il consiste**
• à télécharger, au moyen du logiciel tiers téléchargé sur l'équipement utilisateur, des données de configuration et une page de configuration locale à partir du fournisseur de service (402) (étape 310) ; et
• à charger, au moyen du logiciel tiers téléchargé sur l'équipement utilisateur, la page de configuration locale ajoutée récemment, par le biais d'une interface standard de l'équipement utilisateur (404) (étape 311).

2. Système comprenant un serveur de gestion (401), un fournisseur de service (402), un terminal de service à la clientèle (403) et un équipement utilisateur (404), dans lequel le système est configuré pour réaliser le procédé selon la revendication 1.
